# EUROPEAN PATENT APPLICATION

(11) **EP 4 641 056 A1**
(43) Date of publication of application: **29.10.2025**
(21) Application number: 23906752.3
(22) Date of filing: 07.12.2023
(51) Int. Cl.: F16K 5/04, F16K 11/085

(54) **SEALING MATERIAL FOR ROTARY VALVE**

(30) Priority: 20.12.2022 JP 2022203580
(71) Applicant: AISIN CORPORATION, Kariya-shi, Aichi 448-8650 (JP)
(72) Inventor: YAMAGUCHI Tomohiro, Kariya-shi, Aichi 448-8650 (JP); KIHARA Masao, Kariya-shi, Aichi 448-8650 (JP); OIWA Toshiyuki, Kariya-shi, Aichi 448-8650 (JP)
(74) Representative: Winter, Brandl - Partnerschaft mbB
(86) International application number: PCT/JP2023/043837
(87) International publication number: WO 2024/135386

(57) **Abstract**

A sealing material for a rotary valve is disposed between a rotor and a housing that houses the rotor. The sealing material for the rotary valve includes a main body part extending along a circumferential direction of the rotor and an axis direction of the rotor, and ribs projecting from the main body part in a radial direction of the rotor, in which the ribs include circumferential direction ribs extending along the circumferential direction, the circumferential direction ribs include inner circumferential direction ribs projecting inward in the radial direction and outer circumferential direction ribs projecting outward in the radial direction, and the number of the inner circumferential direction ribs is less than the number of the outer circumferential direction ribs.

## Description

### TECHNICAL FIELD

The present disclosure relates to a sealing material for a rotary valve.

### BACKGROUND ART

A seal member provided on a valve that controls a channel through which fluid flows is disclosed (for example, Patent Literature 1 and Patent Literature 2). A valve disclosed in Patent Literature 1 (a channel switching valve in Patent Literature 1) includes a valve body in which a valve chamber is formed, a seal member housed in the valve chamber, a rotation part housed in the valve chamber and having a valve body in which a circular valve opening is formed, and a valve drive unit of a drive source that rotates the rotation part. The seal member is disposed outside the valve body in a radial direction of the valve, and is formed to annularly surround the valve body.

A valve disclosed in Patent Literature 2 (a rotary slide valve in Patent Literature 2) includes a housing, a rotary slide, and a sealing element disposed between the rotary slide and the housing, and the sealing element includes a first raised portion and a second raised portion extending in a first radial direction, and a third raised portion extending in a second radial direction.

### CITATIONS LIST

### PATENT LITERATURE

Patent Literature 1: JP 2017-207157 A
Patent Literature 2: DE 102022200540 A

### SUMMARY OF INVENTION

### TECHNICAL PROBLEMS

The seal member disclosed in Patent Literature 1 has a plurality of sealing portions having an annular shape so as to surround a peripheral edge of the valve opening, and thus surface pressure received by the sealing portion may increase during rotation of the valve body, and sliding resistance may increase. Furthermore, with the seal element disclosed in Patent Literature 2 also, if a tilted surface of the third raised portion extending in the second radial direction is steep, surface pressure received by the seal element may increase during rotation of the rotary slide, and sliding resistance may increase.

The present disclosure has been made in view of the problems described above, and intends to provide a sealing material for a rotary valve capable of reducing sliding resistance.

### SOLUTIONS TO PROBLEMS

A feature of a sealing material for a rotary valve according to the present disclosure is that the sealing material for the rotary valve is disposed between a rotor and a housing that houses the rotor including a main body part extending along a circumferential direction of the rotor and an axis direction of the rotor, and ribs projecting from the main body part in a radial direction of the rotor, in which the ribs include circumferential direction ribs extending along the circumferential direction, the circumferential direction ribs include inner circumferential direction ribs projecting inward in the radial direction and outer circumferential direction ribs projecting outward in the radial direction, the number of the inner circumferential direction ribs is less than the number of the outer circumferential direction ribs, and tilts of inner circumferential rib tilted portions between inner circumferential rib base ends and inner circumferential rib tips of the inner circumferential direction ribs are gentler than tilts of outer circumferential rib tilted portions between outer circumferential rib base ends and outer circumferential rib tips of the outer circumferential direction ribs.

According to this configuration, the number of the inner circumferential direction ribs in sliding contact with the rotor is less than the number of the outer circumferential direction ribs. Therefore, sliding resistance of the rotor can be reduced. Furthermore, the number of the inner circumferential direction ribs in sliding contact with the rotor is less than the number of the outer circumferential direction ribs in sliding contact with the housing. Therefore, frictional resistance between the housing and the sealing material increases, and it is possible to prevent such inconvenience as the sealing material is displaced along with the rotation of the rotor. Furthermore, according to this configuration, tilts of the inner circumferential rib tilted portions are gentler than the tilts of the outer circumferential rib tilted portions. Therefore, collapse of the inner circumferential direction ribs is suppressed by the rotation of the rotor, and durability of the sealing material can be enhanced. Furthermore, because the tilts of the outer circumferential rib tilted portions are steeper than the tilts of the inner circumferential rib tilted portions, reaction force of the sealing material against the rotor can be reduced.

### BRIEF DESCRIPTION OF DRAWINGS

FIG. 1 is a longitudinal cross-sectional view showing a configuration of a rotary valve according to an embodiment.
FIG. 2 is a diagram showing a first position of a rotor according to the embodiment.
FIG. 3 is a perspective view showing the rotor according to the embodiment.
FIG. 4 is a perspective view showing the rotor as viewed from an angle different from an angle in FIG. 3.
FIG. 5 is a perspective view showing a sealing material according to the embodiment.
FIG. 6 is a perspective view showing the sealing material viewed from an angle different from an angle in FIG. 5.
FIG. 7 is a diagram showing a configuration of a circumferential direction rib according to the embodiment.
FIG. 8 is a diagram showing a configuration of an axial direction rib according to the embodiment.
FIG. 9 is a schematic view showing a positional relationship of tips of ribs according to the embodiment.
FIG. 10 is a diagram showing a second position of the rotor according to the embodiment.
FIG. 11 is a diagram showing a third position of the rotor according to the embodiment.
FIG. 12 is a diagram showing a fourth position of the rotor according to the embodiment.

### DESCRIPTION OF EMBODIMENTS

Hereinafter, a rotary valve including a sealing material according to an embodiment of the present disclosure will be described with reference to the drawings. The rotary valve, however, is not limited to the following embodiments, and various modifications may be made without departing from the gist of the modifications.

### [Basic configuration]

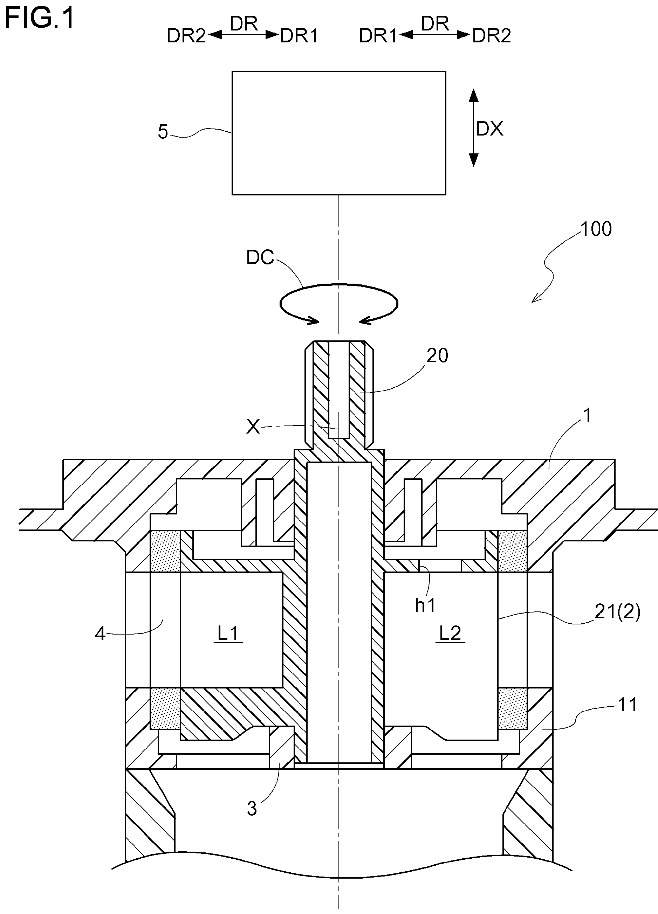

FIG. 1 shows a cross section (longitudinal cross section) along an axis X of a rotary valve 100. In the present embodiment, the rotary valve 100 is a five-way valve, and is used for controlling fluid flowing to a cooling target device such as a battery or motor mounted on a vehicle such as an automobile, for example. The fluid is cooling water such as a long-life coolant (LLC). Note that the fluid may be an insulating oil such as paraffin, or a refrigerant such as hydrofluorocarbon (HFC) or hydrofluoroolefin (HFO).

As shown in FIG. 1, the rotary valve 100 includes a housing 1, a rotor 2 housed in the housing 1, a bush 3 rotatably supporting the rotor 2, a sealing material 4 disposed between the housing 1 and the rotor 2, and an actuator 5 connected to the rotor 2. The actuator 5 transmits rotational force to the rotor 2. The rotor 2 rotates about an axis X by the rotational force from the actuator 5. Flow of the fluid is controlled by the rotation of the rotor 2.

Hereinafter, a direction along the axis X of the rotor 2 is referred to as an "axis direction DX", a circumferential direction DC of the rotor 2 is simply referred to as a "circumferential direction DC", and a radial direction DR of the rotor 2 is simply referred to as a "radial direction DR". Furthermore, a direction from an outside to an inside in the radial direction DR is referred to as a "radially inward direction DR1", and an opposite direction thereof is referred to as a "radially outward direction DR2".

### [Housing]

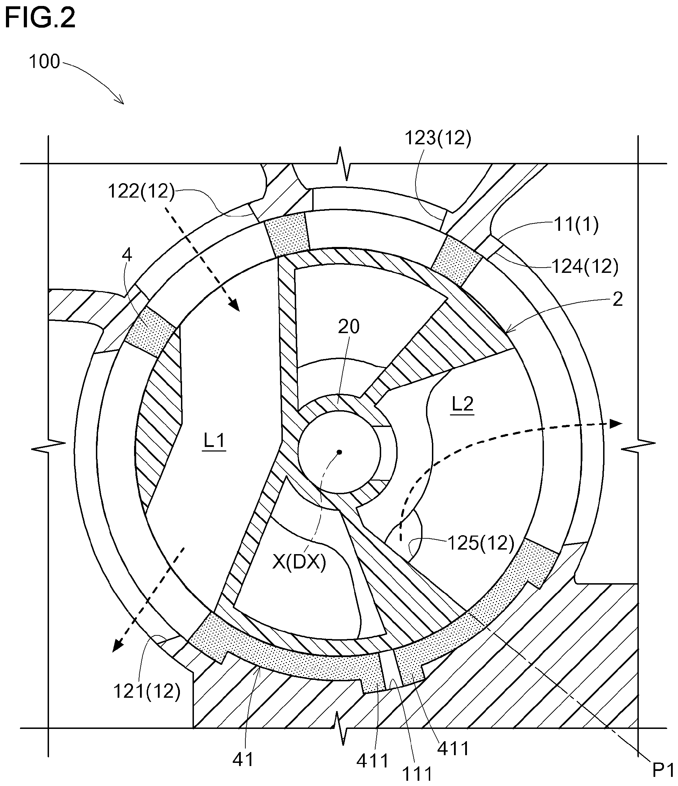

FIG. 2 is a transverse cross-sectional view showing the rotary valve 100. Note that FIG. 2 is a diagram of the rotary valve 100 as viewed from an actuator 5 side. As shown in FIG. 2, the housing 1 has a housing wall portion 11 partitioning a space in which the rotor 2 is housed.

The housing wall portion 11 has a circular shape as viewed along the axis direction DX. In the housing wall portion 11, a plurality of ports 12 are formed along the circumferential direction DC. In the present embodiment, four ports 12 are formed in the housing wall portion 11 along the circumferential direction DC, and the four ports 12 penetrate the housing wall portion 11 along the radial direction DR. Hereinafter, the four ports 12 are referred to as a "first port 121", a "second port 122", a "third port 123", and a "fourth port 124".

Furthermore, a fifth port 125 is formed at a lower portion (bottom wall) of the housing wall portion 11. The first port 121, the second port 122, the third port 123, the fourth port 124, and the fifth port 125 are connected to different external channels. The external channels are connected to, for example, the battery, the motor, and the like.

### [Rotor]

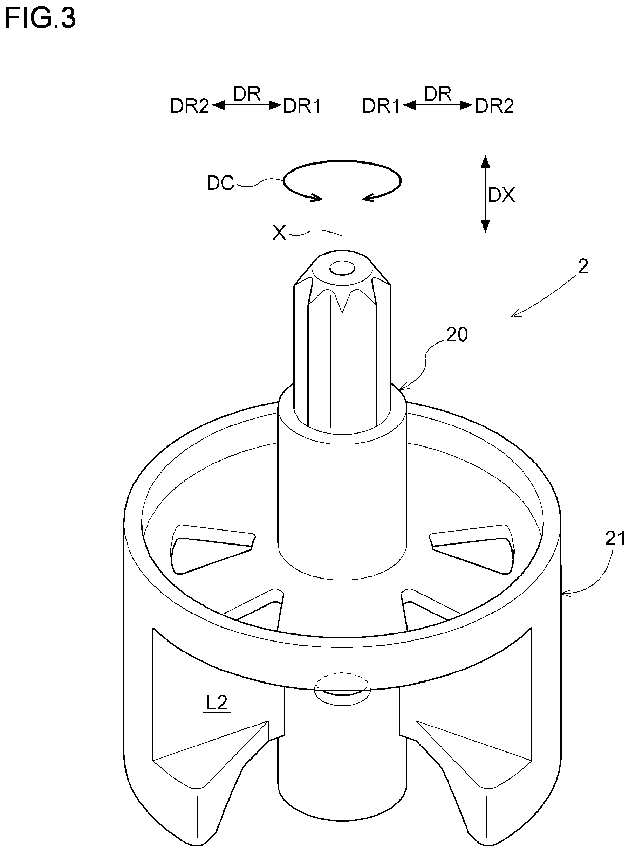

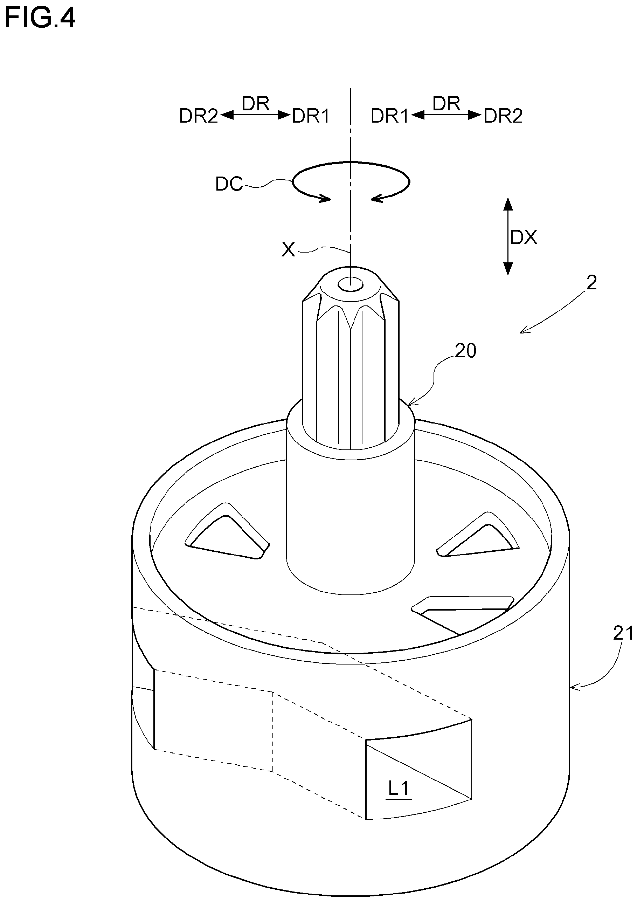

FIGS. 3 and 4 are perspective views showing the rotor 2. As shown in FIGS. 3 and 4, the rotor 2 includes a shaft part 20 coaxial with the axis X, and a valve part 21 having a cylindrical shape and rotatable integrally with the shaft part 20. A material of the rotor 2 is resin or the like, and the shaft part 20 and the valve part 21 are integrally formed.

As shown in FIGS. 1 and 2, the valve part 21 is formed with a first valve channel L1 and a second valve channel L2 through which the fluid flows in the rotor 2 in a predetermined posture. The first valve channel L1 is formed in a substantially V-shape bent in vicinity of the axis X as viewed in a direction along the axis direction DX (refer to FIG. 2). The second valve channel L2 includes a portion cut out in a fan shape (three-dimensionally, in a truncated cone shape) centered on the axis X (refer to FIG. 3).

### [Sealing material]

As shown in FIG. 2, the sealing material 4 is disposed between the housing 1 and the rotor 2 over a substantially entire circumference of the rotor 2 in the circumferential direction DC. The sealing material 4 includes an elastically deformable member, and is compressed by the housing 1 and the rotor 2 to prevent the fluid from flowing into another channel. The sealing material 4 is made of rubber such as nitrile rubber (NBR), fluororubber (FKM), or urethane rubber (U).

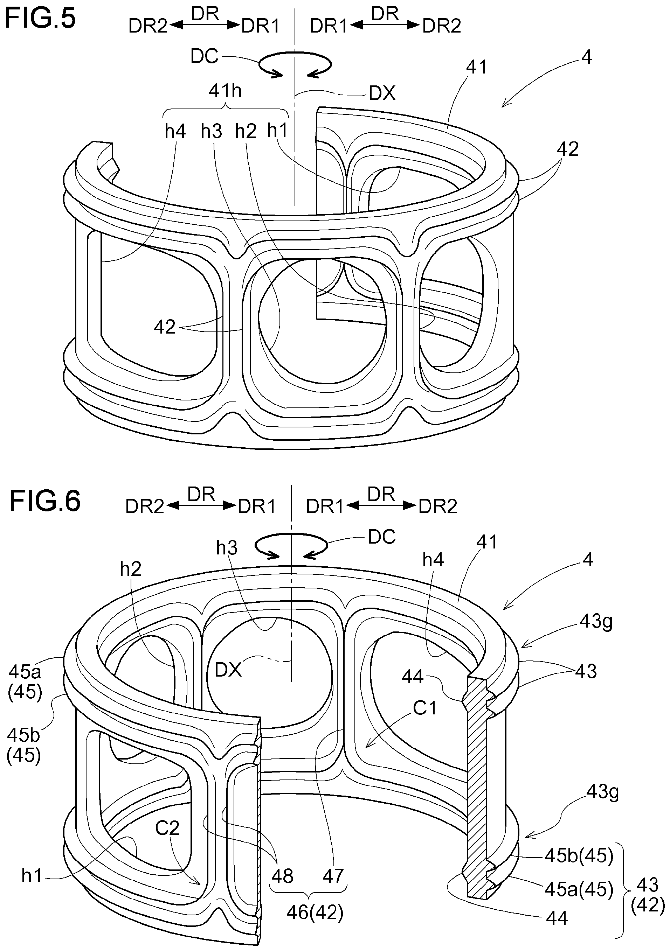

As shown in FIGS. 2, 5, and 6, the sealing material 4 includes a seal main body part 41 (an example of a main body part) having a cylindrical shape. Note that, in FIGS. 5 and 6, a portion of the sealing material 4 in the circumferential direction DC is cut off.

As shown in FIG. 2, in a state where the sealing material 4 is disposed between the housing 1 and the rotor 2, the seal main body part 41 extends along the circumferential direction DC and the axis direction DX. The seal main body part 41 includes protrusions 411 (an example of anti-rotation parts) that prevent rotation of the sealing material 4 with respect to the housing 1. In a state where the sealing material 4 is disposed between the housing 1 and the rotor 2, the protrusions 411 project outward in the radial direction DR from both end portions of the seal main body part 41 in the circumferential direction DC, and are housed in a recess 111 of the housing wall portion 11. Thus, the protrusions 411 and the housing wall portion 11 of the housing 1 face (contact) each other in the circumferential direction DC, and rotation of the sealing material 4 with respect to the housing 1 is prevented.

Furthermore, as shown in FIG. 5, seal openings 41h (an example of an opening) penetrating the seal main body part 41 and through which the fluid passes are formed in the seal main body part 41. Specifically, four seal openings 41h are formed in the seal main body part 41 along the circumferential direction DC. The four seal openings 41h are formed at positions corresponding to the four ports 12 of the housing 1 described with reference to FIG. 2. Hereinafter, each of the four seal openings 41h is referred to as a "first seal opening h1", a "second seal opening h2", a "third seal opening h3", and a "fourth seal opening h4".

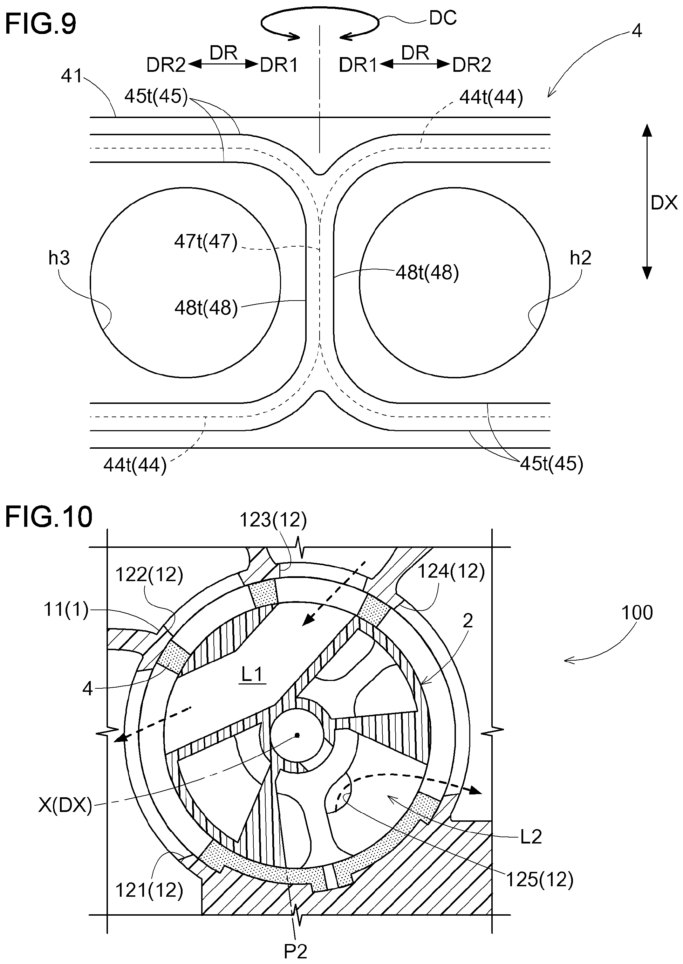

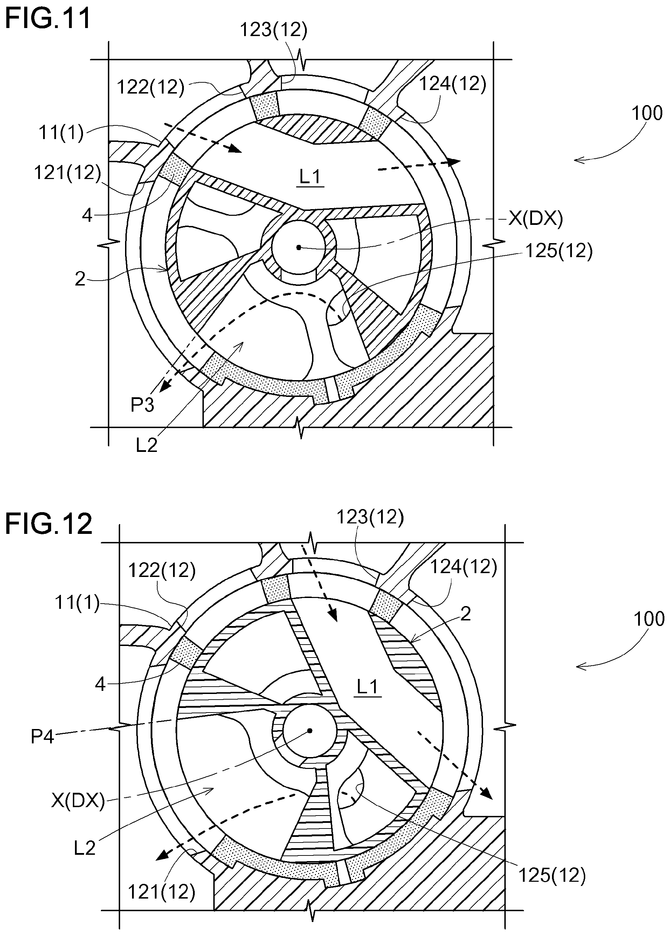

In the present embodiment, dimensions of the first seal opening h1 and the fourth seal opening h4 in the circumferential direction DC are formed to be larger than dimensions of the second seal opening h2 and the third seal opening h3 in the circumferential direction DC. Thus, the fluid flowing in from different ports 12 (for example, the second port 122 and the third port 123) can flow out to the same port 12 (for example, the first port 121) (refer to FIGS. 2 and 10). Alternatively, the fluid flowing in from the same port 12 (for example, the third port 123) can flow into a different port 12 (for example, the first port 121 or the fourth port 124) (refer to FIGS. 10 and 12).

### [Circumferential direction rib]

Furthermore, as shown in FIG. 5, the sealing material 4 includes ribs 42 projecting from the seal main body part 41 in the radial direction DR. As shown in FIG. 6, the ribs 42 include circumferential direction ribs 43 extending (continuously provided) along the circumferential direction DC. The circumferential direction ribs 43 include an inner circumferential direction rib 44 provided on the seal main body part 41 in the radially inward direction DR1 and projecting in the radially inward direction DR1, and outer circumferential direction ribs 45 provided on the seal main body part 41 in the radially outward direction DR2 and projecting in the radially outward direction DR2. The number of the inner circumferential direction ribs 44 is less than the number of the outer circumferential direction ribs 45. In the present embodiment, two inner circumferential direction ribs 44 and four outer circumferential direction ribs 45 are provided on the seal main body part 41.

The circumferential direction ribs 43 include two rib groups 43g provided at both the end portions of the seal main body part 41 in the axis direction DX. The rib groups 43g are provided so as to sandwich the four seal openings 41h in the axis direction DX. In the present embodiment, each of the rib groups 43g includes two outer circumferential direction ribs 45 and one inner circumferential direction rib 44 provided between the two outer circumferential direction ribs 45. Hereinafter, of the two outer circumferential direction ribs 45 included in one rib groups 43g, an outer circumferential direction rib 45 positioned on an end portion side of the seal main body part 41 in the axis direction DX is referred to as a "first outer circumferential direction rib 45a", and an outer circumferential direction rib 45 positioned on a center side of the seal main body part 41 in the axis direction DX is referred to as a "second outer circumferential direction rib 45b".

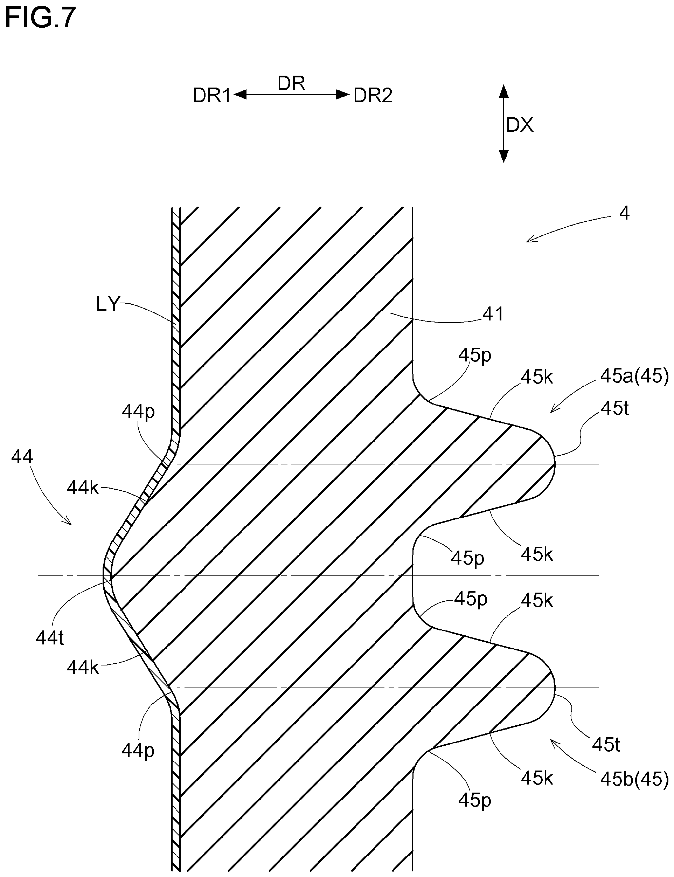

FIG. 7 is a schematic cross-sectional view of the sealing material 4 taken along the axis direction DX. As shown in FIG. 7, a slidability improving layer LY for improving slidability is provided on a surface of the inner circumferential direction rib 44. The slidability improving layer LY is formed by, for example, applying a material having a friction coefficient less than a friction coefficient of the outer circumferential direction ribs 45 (a material of the ribs 42). The slidability improving layer LY is made of polyacetal (POM), polyamide (PA), polytetrafluoroethylene (PTFE), or the like.

Furthermore, as shown in FIG. 7, tilts of inner circumferential rib tilted portions 44k of the inner circumferential direction rib 44 are gentler than tilts of outer circumferential rib tilted portions 45k of the outer circumferential direction ribs 45. In the present embodiment, vicinity of an inner circumferential rib tip 44t and vicinity of outer circumferential rib tips 45t have an arc shape in a cross-sectional view, and a curvature radius of an arc that constitutes the vicinity of the inner circumferential rib tip 44t is larger than a curvature radius of arcs that constitute the vicinity of the outer circumferential rib tips 45t. Note that the inner circumferential rib tilted portions 44k are portions between inner circumferential rib base ends 44p that are base ends of the inner circumferential direction rib 44 and the inner circumferential rib tip 44t that is a tip of the inner circumferential direction rib 44, and that the outer circumferential rib tilted portions 45k are portions between outer circumferential rib base ends 45p that are base ends of the outer circumferential direction ribs 45 and the outer circumferential rib tips 45t that are tips of the outer circumferential direction ribs 45.

### [Axial direction rib]

Furthermore, as shown in FIG. 6, the ribs 42 further include axial direction ribs 46 extending (continuously provided) along the axis direction DX. Each of the axial direction ribs 46 includes an inner axial direction rib 47 provided on the seal main body part 41 in the radially inward direction DR1 and projecting in the radially inward direction DR1, and outer axial direction ribs 48 provided on the seal main body part 41 in the radially outward direction DR2 and projecting in the radially outward direction DR2. Note that, hereinafter, the inner circumferential direction ribs 44 and the inner axial direction ribs 47 may be collectively referred to as "inner ribs", and the outer circumferential direction ribs 45 and the outer axial direction ribs 48 may be collectively referred to as "outer ribs".

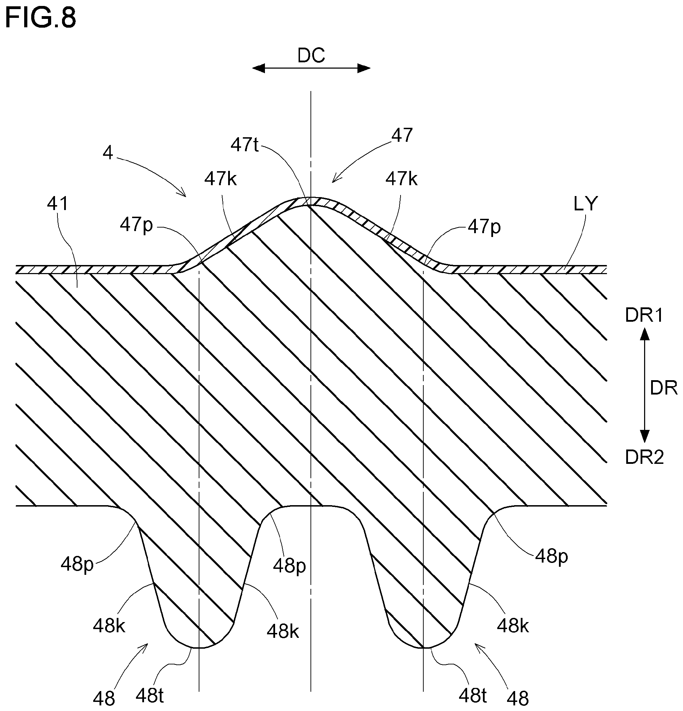

FIG. 8 is a schematic cross-sectional view obtained by cutting a portion of the sealing material 4 along a direction orthogonal to the axis direction DX. As shown in FIG. 8, similarly to the inner circumferential direction rib 44 described with reference to FIG. 7, a surface of the inner axial direction rib 47 is also provided with the slidability improving layer LY. That is, the slidability improving layer LY is provided on surfaces of the inner ribs. Furthermore, a shape of the axial direction ribs 46 is also substantially similar to a shape of the circumferential direction ribs 43. Specifically, tilts of inner axial rib tilted portions 47k of the inner axial direction rib 47 are gentler than tilts of outer axial rib tilted portions 48k of the outer axial direction ribs 48. Note that the inner axial rib tilted portions 47k are portions between inner axial rib base ends 47p that are base ends of the inner axial direction rib 47 and an inner axial rib tip 47t that is a tip of the inner axial direction rib 47, and that the outer axial rib tilted portions 48k are portions between outer axial rib base ends 48p that are base ends of the outer axial direction ribs 48 and outer axial rib tips 48t that are tips of the outer axial direction ribs 48.

As shown in FIG. 6, in the present embodiment, the inner axial direction ribs 47 and outer axial direction ribs 48 are provided so as to sandwich each of the four seal openings 41h in the circumferential direction DC. The ribs 42 (the circumferential direction ribs 43 and axial direction ribs 46) are provided so as to surround a seal opening 41h. Specifically, each inner axial direction rib 47 has ends in the axis direction DX connected to the inner circumferential direction ribs 44, and each of the outer axial direction ribs 48 has ends in the axis direction DX connected to the second outer circumferential direction ribs 45b. In the present embodiment, a first connection portion C1 between each of the inner axial direction ribs 47 and the inner circumferential direction ribs 44, and a second connection portion C2 between each of the outer axial direction ribs 48 and the second outer circumferential direction ribs 45b have a rounded round shape, as viewed along the radial direction DR.

FIG. 9 is a schematic view showing a positional relationship of the tips of the ribs 42. As shown in FIGS. 7 to 9, the inner circumferential direction ribs 44 and the outer circumferential direction ribs 45 are provided such that the inner circumferential rib tips 44t and the outer circumferential rib tips 45t do not overlap each other as viewed along the radial direction DR. Specifically, each inner circumferential rib tip 44t is provided between two (adjacent) outer circumferential rib tips 45t in the axis direction DX. Similarly, the inner axial direction ribs 47 and the outer axial direction ribs 48 are provided such that the inner axial rib tips 47t and the outer axial rib tips 48t do not overlap each other as viewed along the radial direction DR. Specifically, in the circumferential direction DC, each inner axial rib tip 47t is provided between the outer axial rib tips 48t of two (adjacent) outer axial direction ribs 48.

### [Fluid control]

Next, fluid control by the rotary valve 100 will be described with reference to FIGS. 2 and 10 to 12. The rotary valve 100 according to the present embodiment simultaneously controls two channels. Note that FIG. 2 is a diagram showing the rotary valve 100 in which the rotor 2 is set to a first position P1, FIG. 10 is a diagram showing the rotary valve 100 in which the rotor 2 is set to a second position P2, FIG. 11 is a diagram showing the rotary valve 100 in which the rotor 2 is set to a third position P3, and FIG. 12 is a diagram showing the rotary valve 100 in which the rotor 2 is set to a fourth position P4.

As shown in FIG. 2, when the rotor 2 is set to the first position P1, the fluid supplied to the second port 122 passes through the first valve channel L1 and flows to the first port 121, and the fluid supplied to the fifth port 125 passes through the second valve channel L2 and flows to the fourth port 124.

Next, when the rotor 2 rotates clockwise by a predetermined angle about the axis X from the first position P1 shown in FIG. 2, and the rotor 2 is set to the second position P2 as shown in FIG. 10, the fluid supplied to the third port 123 passes through the first valve channel L1 and is supplied to the first port 121. Furthermore, at the same time, the fluid supplied to the fifth port 125 passes through the second valve channel L2 and flows to the fourth port 124.

Subsequently, when the rotor 2 rotates clockwise by a predetermined angle about the axis X from the second position P2 shown in FIG. 10, and the rotor 2 is set to the third position P3 as shown in FIG. 11, the fluid supplied to the second port 122 passes through the first valve channel L1 and flows to the fourth port 124. Furthermore, at the same time, the fluid supplied to the fifth port 125 passes through the second valve channel L2 and flows to the first port 121.

Next, when the rotor 2 further rotates clockwise by a predetermined angle about the axis X from the third position P3 shown in FIG. 11, and the rotor 2 is set to the fourth position P4 as shown in FIG. 12, the fluid supplied to the third port 123 passes through the first valve channel L1 and flows to the fourth port 124. At the same time, the fluid supplied to the fifth port 125 passes through the second valve channel L2 and flows to the first port 121.

### [Effects of embodiment]

As described above, according to the present embodiment, the number of the inner circumferential direction ribs 44 in sliding contact with the rotor 2 is less than the number of the outer circumferential direction ribs 45. Therefore, sliding resistance can be reduced. Furthermore, the number of the inner circumferential direction ribs 44 in sliding contact with the rotor 2 is less than the number of the outer circumferential direction ribs 45 in sliding contact with the housing 1. Therefore, frictional resistance between the housing 1 and the sealing material 4 increases, and it is possible to prevent such inconvenience as the sealing material 4 is displaced along with the rotation of the rotor 2.

Furthermore, because the circumferential direction ribs 43 include the two rib groups 43g at both the end portions in the axis direction DX, force acting on the sealing material 4 can be balanced, and deformation (collapse) of the sealing material 4 can be suppressed. Furthermore, because each of the rib groups 43g includes two outer circumferential direction ribs 45 and one inner circumferential direction rib 44 provided between the two outer circumferential direction ribs 45, when force (force from the rotor 2) acts on the inner circumferential direction rib 44, a portion between the two outer circumferential direction ribs 45 can bend. As a result, reaction force of the sealing material 4 against the rotor 2 can be reduced, and the sliding resistance can be reduced.

Furthermore, the inner circumferential direction ribs 44 and the outer circumferential direction ribs 45 are provided such that the inner circumferential rib tips 44t of the inner circumferential direction ribs 45 and the outer circumferential rib tips 45t of the outer circumferential direction ribs 44 do not overlap as viewed along the radial direction DR. Therefore, when the force (force from the rotor 2) acts on the inner circumferential direction ribs 44, the sealing material 4 can bend outward, and reaction force of the sealing material 4 against the rotor 2 can be reduced.

Furthermore, the tilts of the inner circumferential rib tilted portions 44k are gentler than the tilts of the outer circumferential rib tilted portions 45k. Therefore, collapse of the inner circumferential direction rib 44 is suppressed by the rotation of the rotor 2, and durability of the sealing material 4 can be enhanced. Furthermore, because the tilts of the outer circumferential rib tilted portions 45k are steeper than the tilts of the inner circumferential rib tilted portions 44k, reaction force of the sealing material 4 against the rotor 2 can be reduced.

Furthermore, because the axial direction ribs 46 extending along the axis direction DX are connected to the circumferential direction ribs 43 extending along the circumferential direction DC, and the circumferential direction ribs 43 and the axial direction ribs 46 surround the seal openings 41h through which the fluid flows in and out, sealability of the sealing material 4 can be further improved.

Furthermore, because the connection portions (the first connection portion C1 and the second connection portion C2) between each of the axial direction ribs 46 and the circumferential direction ribs 43 have a round shape, it is possible to avoid each of the inner circumferential rib tips 44t of the inner circumferential direction ribs 44 and each of the outer circumferential rib tips 45t of the outer circumferential direction ribs 45 from overlapping in the radial direction DR, in the entire seal main body part 41. Thus, a portion between the outer circumferential rib tips 45t can bend over the entire seal main body part 41, and it is possible to reduce reaction force of the sealing material 4 against the rotor 2.

Furthermore, because the slidability improving layer LY made of a material having a friction coefficient less than a friction coefficient of the outer circumferential direction ribs 45 is provided on the surface of the inner circumferential direction rib 44, sliding resistance of the rotor 2 can be further reduced.

Furthermore, because the seal main body part 41 includes the protrusions 411 projecting in the radially outward direction DR2, and the protrusions 411 face the housing wall portion 11 of the housing 1 in the circumferential direction DC, it is possible to prevent rotation of the sealing material 4 with respect to the housing 1 (co-rotation with the rotor 2, displacement).

Furthermore, by providing the outer circumferential direction ribs 45 that have a distance (radius) from a rotation center of the rotor 2 longer than the inner circumferential direction ribs 44 do, torque necessary for rotating the outer circumferential direction ribs 45 becomes larger than torque necessary for rotating the inner circumferential direction ribs 44, by which rotation of the sealing material 4 with respect to the housing 1 can be suppressed.

### [Other embodiments]

The present disclosure may be configured as follows in addition to the above-described embodiment (those having the same functions as those in the embodiment are denoted by the same numbers and reference signs as in the embodiment).
(1) In the present embodiment, a case has been described where each of the rib groups 43g includes one inner circumferential direction rib 44 and two outer circumferential direction ribs 45. However, as long as the number of the inner circumferential direction ribs 44 is less than the number of the outer circumferential direction ribs 45, the number of the inner circumferential direction ribs 44 and outer circumferential direction ribs 45 that constitute the rib groups 43g is not limited to the above. For example, each of the rib groups 43g may include two inner circumferential direction ribs 44 and three outer circumferential direction ribs 45.
(2) In the present embodiment, a case has been described where the tips of the inner ribs (inner circumferential rib tips 44t and inner axial rib tips 47t) and the tips of the outer ribs (outer circumferential rib tips 45t and outer axial rib tips 48t) do not overlap each other as viewed in the radial direction DR. However, at least some of the inner circumferential rib tips 44t and at least some of the outer circumferential rib tips 45t may overlap each other as viewed in the radial direction DR. Similarly, when viewed in the radial direction DR, at least some of the inner axial rib tips 47t and at least some of the outer axial rib tips 48t may overlap each other. That is, as viewed along the radial direction DR, the tips of at least some of the inner ribs may overlap the tips of at least some of the outer ribs.
(3) In the present embodiment, a case has been described where the tilts of the tilted portions of the inner ribs (the inner circumferential rib tilted portions 44k and the inner axial rib tilted portions 47k) are gentler than the tilts of the tilted portions of the outer ribs (the outer circumferential rib tilted portions 45k and the outer axial rib tilted portions 48k). However, the tilts of the inner circumferential rib tilted portions 44k may not be gentler than the tilts of the outer circumferential rib tilted portions 45k. Similarly, the tilts of the inner axial rib tilted portions 47k may not be gentler than the tilts of the outer axial rib tilted portions 48k. That is, the tilts of the inner ribs may not be gentler than the tilts of the outer ribs.
(4) In the present embodiment, a case has been described where the first connection portion C1 and the second connection portion C2 have a round shape. However, at least either the first connection portion C1 and the second connection portion C2 may not have a round shape.
(5) In the present embodiment, the inner circumferential direction ribs 44 and the inner axial direction ribs 47 may not include the slidability improving layer LY.
(6) In the present embodiment, the seal main body part 41 includes the protrusions 411 that prevent rotation of the sealing material 4 with respect to the housing 1. However, the seal main body part 41 may prevent rotation of the sealing material 4 with respect to the housing 1 with a configuration (in which, for example, protrusions projecting along the axis direction DX and the housing 1 are fitted to each other) other than the protrusions 411.
(7) In the present embodiment, the rotary valve 100 having five ways has been described as an example. However, the rotary valve 100 may be a three-way valve, a four-way valve, or the like. That is, the number of the ports 12 formed in the housing 1 (housing wall portion 11) is not limited to five, and is appropriately changed according to the number of fluid directions controlled by the rotary valve 100.
(8) Inlets and outlets of the fluid are not limited to those in the case described in the present embodiment, and can be replaced with each other. That is, a direction in which the fluid flows may be reversed.

In the embodiments described above, the following configurations are conceivable.
(1) A feature of a sealing material 4 for a rotary valve 100 according to the present disclosure is that the sealing material 4 for the rotary valve 100 is disposed between a rotor 2 and a housing 1 that houses the rotor 2, and includes a seal main body part 41 (main body part) extending along a circumferential direction DC of the rotor 2 and an axis direction DX of the rotor 2, and ribs 42 projecting from the seal main body part 41 (main body part) in a radial direction DR of the rotor 2, in which the ribs 42 include circumferential direction ribs 43 extending along the circumferential direction DC, the circumferential direction ribs 43 include inner circumferential direction ribs 44 projecting inward in the radial direction DR and outer circumferential direction ribs 45 projecting outward in the radial direction DR, the number of the inner circumferential direction ribs 44 is less than the number of the outer circumferential direction ribs 45, and tilts of inner circumferential rib tilted portions 44k between inner circumferential rib base ends 44p and inner circumferential rib tips 44t of the inner circumferential direction ribs 44 are gentler than tilts of outer circumferential rib tilted portions 45k between outer circumferential rib base ends 45p and outer circumferential rib tips 45t of the outer circumferential direction ribs 45.
   According to this configuration, the number of the inner circumferential direction ribs 44 in sliding contact with the rotor 2 is less than the number of the outer circumferential direction ribs 45. Therefore, sliding resistance of the rotor 2 can be reduced. Furthermore, the number of the inner circumferential direction ribs 44 in sliding contact with the rotor 2 is less than the number of the outer circumferential direction ribs 45 in sliding contact with the housing 1. Therefore, frictional resistance between the housing 1 and the sealing material 4 increases, and it is possible to prevent such inconvenience as the sealing material 4 is displaced along with the rotation of the rotor 2. Furthermore, according to this configuration, tilts of the inner circumferential rib tilted portions 44k are gentler than the tilts of the outer circumferential rib tilted portions 45k. Therefore, collapse of the inner circumferential direction rib 44 is suppressed by the rotation of the rotor 2, and durability of the sealing material 4 can be enhanced. Furthermore, because the tilts of the outer circumferential rib tilted portions 45k are steeper than the tilts of the inner circumferential rib tilted portions 44k, reaction force of the sealing material 4 against the rotor 2 can be reduced.
(2) In the sealing material 4 for the rotary valve 100 according to (1), the circumferential direction ribs 43 may include two rib groups 43g provided on both end portions in the axis direction DX, and each of the rib groups 43g may include two outer circumferential direction ribs 45, and one inner circumferential direction rib 44 between the two outer circumferential direction ribs 45.
   According to this configuration, because the circumferential direction ribs 43 include the two rib groups 43g at both the end portions in the axis direction DX, force acting on the sealing material 4 can be balanced, and deformation (collapse) of the sealing material 4 can be suppressed. Furthermore, because each of the rib groups 43g includes two outer circumferential direction ribs 45 and one inner circumferential direction rib 44 provided between the two outer circumferential direction ribs 45, when force acts on the inner circumferential direction rib 44, a portion between the two outer circumferential direction ribs 45 can bend. As a result, reaction force of the sealing material 4 against the rotor 2 can be reduced, and the sliding resistance can be reduced.
(3) In the sealing material 4 for the rotary valve 100 according to (1) or (2), the inner circumferential direction ribs 44 and the outer circumferential direction ribs 45 may be provided such that the inner circumferential rib tips 44t of the inner circumferential direction ribs 44 and the outer circumferential rib tips 45t of the outer circumferential direction ribs 45 do not overlap as viewed along the radial direction DR.
   According to this configuration, the inner circumferential rib tip 44t and the outer circumferential rib tips 45t do not overlap each other. Therefore, when force acts on the inner circumferential direction rib 44, the sealing material 4 can bend outward, and reaction force of the sealing material 4 against the rotor 2 can be reduced.
(4) In the sealing material 4 for the rotary valve 100 according to any one of (1) to (3), each of the inner circumferential rib tips 44t may be positioned between the outer circumferential rib tips 45t adjacent to each other as viewed along the radial direction DR.
   According to this configuration, the inner circumferential rib tip 44t is positioned between the outer circumferential rib tips 45t adjacent to each other. Therefore, when force acts on the inner circumferential direction rib 44, the sealing material 4 can bend outward, and reaction force of the sealing material 4 against the rotor 2 can be reduced.
(5) In the sealing material 4 for the rotary valve 100 according to any one of (1) to (4), the ribs 42 may further include axial direction ribs 46 extending along the axis direction DX and connected to the circumferential direction ribs 43, and the circumferential direction ribs 43 and the axial direction ribs 46 may surround a seal opening 41h (opening) formed in the seal main body part 41 (main body part) and through which fluid passes.
   According to this configuration, because the axial direction ribs 46 extending along the axis direction DX are connected to the circumferential direction ribs 43 extending along the circumferential direction DC, and the circumferential direction ribs 43 and the axial direction ribs 46 surround the seal opening 41h (opening) through which the fluid flows in and out, sealability can be further improved.
(6) In the sealing material 4 for the rotary valve 100 according to (5), a first connection portion C1 and a second connection portion C2 (connection portions) between the axial direction ribs 46 and the circumferential direction ribs 43 may have a round shape.
   According to this configuration, because the first connection portion C1 and the second connection portion C2 (connection portions) between each of the axial direction ribs 46 and the circumferential direction ribs 43 have a round shape, it is possible to avoid each of the inner circumferential rib tips 44t of the inner circumferential direction ribs 44 and each of the outer circumferential rib tips 45t of the outer circumferential direction ribs 45 from overlapping each other in the radial direction DR, in the entire seal main body part 41 (main body part). Thus, reaction force of the sealing material 4 against the rotor 2 can be reduced.
(7) In the sealing material 4 for the rotary valve 100 according to any one of (1) to (6), a slidability improving layer LY made of a material having a friction coefficient less than a friction coefficient of the outer circumferential direction ribs 45 may be provided on a surface of the inner circumferential direction ribs 44.
   According to this configuration, because the slidability improving layer LY made of a material having a friction coefficient less than a friction coefficient of the outer circumferential direction ribs 45 is provided on the surface of the inner circumferential direction rib 44, sliding resistance of the rotor 2 can be further reduced.
(8) In the sealing material 4 for the rotary valve 100 according to any one of (1) to (7), the seal main body part 41 (main body part) may include protrusions 411 (anti-rotation parts) projecting outward in the radial direction DR so as to face a housing wall portion 11 (wall portion) of the housing 1 in the circumferential direction DC.

According to this configuration, because the seal main body part 41 (main body part) includes the protrusions 411 (anti-rotation parts) projecting outward in the radial direction DR, and the protrusions 411 (anti-rotation parts) face the housing wall portion 11 (wall portion) of the housing 1 in the circumferential direction DC, it is possible to prevent rotation of the sealing material 4 with respect to the housing 1 (displacement).

### INDUSTRIAL APPLICABILITY

The present disclosure can be utilized for a sealing material for a rotary valve.

### REFERENCE SIGNS LIST

1: Housing, 2: Rotor, 11: Housing wall portion (wall portion), 4: Sealing material, 41: Seal main body part (main body part), 41h: Seal opening (opening), 42: Rib, 43: Circumferential direction rib, 43g: Rib group, 44: Inner circumferential direction rib, 44k: Inner circumferential rib tilted portion, 44p: Inner circumferential rib base end, 44t: Inner circumferential rib tip, 45: Outer circumferential direction rib, 45k: Outer circumferential rib tilted portion, 45p: Outer circumferential rib base end, 45t: Outer circumferential rib tip, 46: Axial direction rib, 100: Rotary valve, 411: Protrusion (anti-rotation part), C1: First connection portion (connection portion), C2: Second connection portion (connection portion), DC: Circumferential direction, DR: Radial direction, DX: Axis direction, LY: Slidability improving layer, and X: Axis

## Claims

1. A sealing material for a rotary valve, the sealing material being disposed between a rotor and a housing that houses the rotor, comprising:
a main body part extending along a circumferential direction of the rotor and an axis direction of the rotor; and
ribs projecting from the main body part in a radial direction of the rotor,
wherein
the ribs include circumferential direction ribs extending along the circumferential direction,
the circumferential direction ribs include inner circumferential direction ribs projecting inward in the radial direction and outer circumferential direction ribs projecting outward in the radial direction,
the number of the inner circumferential direction ribs is less than the number of the outer circumferential direction ribs, and
tilts of inner circumferential rib tilted portions between inner circumferential rib base ends and inner circumferential rib tips of the inner circumferential direction ribs are gentler than tilts of outer circumferential rib tilted portions between outer circumferential rib base ends and outer circumferential rib tips of the outer circumferential direction ribs.

2. The sealing material for the rotary valve according to claim 1, wherein
the circumferential direction ribs include two rib groups provided on both end portions in the axis direction, and
each of the rib groups includes two the outer circumferential direction ribs, and one the inner circumferential direction rib between two the outer circumferential direction ribs.

3. The sealing material for the rotary valve according to claim 1 or 2, wherein the inner circumferential direction ribs and the outer circumferential direction ribs are provided such that the inner circumferential rib tips of the inner circumferential direction ribs and the outer circumferential rib tips of the outer circumferential direction ribs do not overlap as viewed along the radial direction.

4. The sealing material for the rotary valve according to claim 3, wherein each of the inner circumferential rib tips is positioned between the outer circumferential rib tips adjacent to each other as viewed along the radial direction.

5. The sealing material for the rotary valve according to claim 1 or 2, wherein
the ribs further include axial direction ribs extending along the axis direction and connected to the circumferential direction ribs, and
the circumferential direction ribs and the axial direction ribs surround an opening formed in the main body part and through which fluid passes.

6. The sealing material for the rotary valve according to claim 5, wherein connection portions between the axial direction ribs and the circumferential direction ribs have a round shape.

7. The sealing material of the rotary valve according to claim 1 or 2, wherein a slidability improving layer made of a material having a friction coefficient less than a friction coefficient of the outer circumferential direction ribs is provided on a surface of the inner circumferential direction ribs.

8. The sealing material for the rotary valve according to claim 1 or 2, wherein the main body part includes anti-rotation parts projecting outward in the radial direction so as to face a wall portion of the housing in the circumferential direction.
